# EUROPEAN PATENT APPLICATION

(11) **EP 1 935 918 A1**
(43) Date of publication of application: **25.06.2008**
(21) Application number: 06380326.6
(22) Date of filing: 20.12.2006
(51) Int. Cl.: C08G 65/26, C08G 18/48

(54) **New reactive polyols**

(71) Applicant: REPSOL YPF S.A., 28046 Madrid (ES)
(72) Inventor: Sánchez Magdaleno, Raquel, Boadilla del Monte 28660 Madrid (ES); Brami, Laurent, 92500 Rueil Malmaison (FR); Devic, Anne Chloe, 28043 Madrid (ES); Garcia Ruiz, Monica, 28804 Alcalá de Henares Madrid (ES)
(74) Representative: Garcia-Cabrerizo y del Santo, Pedro Maria

(57) **Abstract**

A process for making a reactive polyether polyol having unsaturation from 0.06 to 0.2 meq/g and having an average molecular weight of 3000 to 5000 and having a functionality from 2.1 to 2.5 said process comprising polymerizing in a reactor a reaction mixture that contains propylene oxide, a hydroxyl group-containing or an amino group-containing initiator, and a polymerization catalyst selected from the group consisting of alkali and/or alkaline earth metal hydroxides and/or alkali metal alkoxides, to produce a polyether polyol, said process further characterized in that the polymerization temperature is within the range of 125 DEG C to 150 DEG C.

## Description

### FIELD OF THE INVENTION

The invention relates to polyether polyol synthesis. In particular, the invention is an exceptionally productive process for making specific higher unsaturation and lower molecular weight polyether polyols than the standard exisiting polyols made with conventional base catalysts.

### BACKGROUND OF THE INVENTION

Polyether polyols, key intermediates for the production of polyurethanes, are manufactured commercially by polymerizing propylene oxide and or ethylene oxide in the presence of hydroxyl or amino group-containing initiators and basic catalysts. While the nominal functionality of the polyol product is that of the initiator, the average hydroxyl functionality is actually lower than the nominal functionality. The lower actual functionality is the result of isomerization of some of the propylene oxide into allyl alcohol under the basic reaction conditions, and the allyl alcohol is propoxylated to give a polyether monol impurity. Polyether monol impurities, which are estimated by measuring polyol unsaturation, have been reported to adversely impact polyurethane physical properties.

Recently, most approaches to preparing polyether polyols focus on reduced levels of polyether monol impurities thereby preparing polyols at relatively low temperatures with conventional catalysts, or have used special catalysts such as double metal cyanide compounds. Because low-unsaturation polyols can give improved polyurethanes, synthetic routes to the polyols are of interest.

A more preferred process for preparing polyether polyols would allow preparation of polyether polyols at relatively high temperatures with conventional base catalysts, but without sacrifying the quality of the polyol. Preferably, the process would permit faster epoxide feed rates, increased productivity , and/or reduced catalyst requirements. In addition, there is a lower percentage of unreacted PO in the reactor at those high temperatures which , in turn, further reduce risks of runaway reaction in the reactor and during stripping stages can decrease the level of releases at effluent treatment stations which also has a direct influence on the level of volatiles the final polyol may have .An amount of volatile organic compounds in the final polyol can be thus reduced upstream during the process. A preferred process could be performed at low epoxide concentrations to improve process safety. A process that could use a conventional base catalyst to make high -unsaturation, low equivalent weight polyols would be valuable.

Such a process operating at higher temperatures implies polymerization rates that are faster and a production efficiency which is higher . If higher reaction temperatures can be used without sacrifying the quality of the polyol , production would not be limited. This in turn, would have an impact on the availablity for the customer and on the market.

In accordance with the present invention, a process has now been provided for preparing polyether polyols having increased unsaturation at a given lower molecular weight in order to obtain the standard functionality of a conventional high molecular weight polyether polyol. Following the optimal interaction of these parameters, a polyol is obtained providing the benefits as formulated therefore. The polyol of the present invention allows the same application and performance in foaming as conventional high MW polyols.

In accordance to another embodiment of the present invention, the present invention resides in a method for producing a polyurethane flexible foam, which comprises reacting at least one polyol of the present invention in the presence of a polyisocyanate and optionally further ingredients such as a polymer-dispersed polyol, a crosslinking agent , a low viscosity compound , a catalyst, a foaming agent and a foam stabilizer.

In accordance with another embodiment of the present invention a new polyether polyol is provided having
i) an unsaturation from 0.06 to 0.2 meq/g
ii) an average molecular weight of 3000 to 5000
iii) A functionality from 2.1 to 2.5 ,
Preferably these polyether polyols having from 70 to
90% primary hydroxyl groups .

It has also been surprisingly found that the specific process and polyol according to the present invention is very suitable for the making of flexible foam. A problem associated with the making of the foam is that it sometimes becomes hard to satisfactorily mix the starting materials in the preparation of a polyurethane foam.

A special class of polyols are the copolymer polyols made from polymerization of ethylenically unsaturated monomers (typically styrene and/or acrylonitrile), PHD (polyurea or poly-harnstoff dispersion), PIPA (polyisocyanate polyaddition), polyepoxide or polyisocyanurate, which are dispersed into conventional carrier polyols. Carrier polyols like described before can be both feedstock polyols, that is polyols which are added to the reactor before and/or during the polymerization of the solid particles, and diluent polyol which is added to the feedstock polyol after this polymerization.

Generally, copolymer polyols are produced by polymerizing one or more ethylenically unsaturated monomers dissolved or dispersed in a polyol (carrier polyol) in the presence of a free radical polymerization initiator to form a stable dispersion of solid polymer particles in the polyol.

The low viscosity polyol of the present invention allows to increase the solid content when making the polymer polyol from the said polyol , keeping viscosity similar to other polymer polyols

### SUMMARY OF THE INVENTION

The invention is a process for preparing polyether polyols having increased unsaturation at a given low MW in order to obtain the standard functionality of a conventional high MW polyol. The process can be used to make said low molecular weight, high-unsaturation polyether polyols at high production rates.

The key to the process is the selection and optimization of reaction parameters and conditions providing the specific polyether polyols in accordance with the present invention.

### DETAILED DESCRIPTION OF THE INVENTION

The manufacture of polyether polyols from propylene oxide is extensively described in the prior art. Most conventionally, these polyols are made by the based catalyzed polyaddition of propylene oxide (and also ethylene oxide generally as a tip) onto a polyfunctional initiator, such as glycerol or trimethylol propane, in the presence of a catalyst. The nominal functionality of the polyol is the functionality of the initiator. Thus the propoxylation of glycerol gives a nominal triol. A well-known problem with the conventional synthesis of high molecular weight polyols based on propylene oxide is the co-production of minor amounts of terminally unsaturated mono-ols. In the conventional manufacturing process the relative concentration of these unsaturated mono-ol impurities in the final polyether polyol increases with the degree of propoxylation or, in other words, with the hydroxyl equivalent weight of the polyol. As a consequence of the mono-ol impurities in conventional polyether polyols the real functionality (number averaged) of these polyols is much lower than the nominal functionality. Polyether polyols are typically characterized as to their degree of terminal unsaturation, due to these monofunctional species. The unsaturation in polyether polyols is usually expressed as meq/g of terminal unsaturation, due to these mono-ol by products of manufacture.

High-primary hydroxyl groups, low-unsaturation polyols DMC type catalysed were available previously, but only by a recatalysis procedure that requires careful stripping prior to ethoxylation. Even with good stripping, the recatalysis approach often gives hazy polyols. These polyols have a high functionality which often need to be reduced by mixing with other polyol. The process of the invention surprisingly gives directly the required functionality together with lower viscosity.
And the polyols made by the process of the invention are particularly useful to make polymer polyols with a high solid content and low viscosity . This allow the use of less polymer polyol in the foam and therefore reduce the cost but also allows a better processibility of the foam .

The copolymer polyols made from polymerization of ethylenically unsaturated monomers (typically styrene and/or acrylonitrile), PHD (polyurea or poly-harnstoff dispersion), PIPA (polyisocyanate polyaddition), polyepoxide or polyisocyanurate, which are dispersed into conventional carrier polyols.

Generally, copolymer polyols are produced by polymerizing one or more ethylenically unsaturated monomers dissolved or dispersed in a polyol (carrier polyol) in the presence of a free radical polymerization initiator to form a stable dispersion of solid polymer particles in the polyol.

Preferred polymer polyols comprise the polyether polyol said polyol having
i) unsaturation from 0.06 to 0.2 meq/g
ii) average molecular weight of 3000 to 5000
iii) functionality from 2.2 to 2.5
iv) from 70 to 90% primary hydroxyl groups

The preferred range of solid content of the polymer polyol is between 10 and 50 % , most preferably between 40 and 50 %.

The polyols made by the process of the invention are particularly useful for making polyurethane foams. The polyols are especially valuable for making molded and slabstock polyurethane foams, require a high content of primary hydroxyl groups for adequate reactivity.

In the process of the invention, polyether polyols are prepared by polymerizing propylene oxide in the presence of an initiator and an epoxide polymerization catalyst. Propylene oxide can be used alone or in combination with other epoxides such as ethylene oxide, butylene oxides, and the like. The other epoxides can be added as a mixed feed with propylene oxide, or can be added following PO polymerization as a block, as in the preparation of EO-capped polyols.

Initiators useful in the process have hydroxyl or amino functional groups, and are well known in the art. The initiator can be a low molecular weight compound, such as glycerin, sorbitol, ethylene diamine, trimethylolpropane, propylene glycol, or the like. Also suitable as initiators are polyether polyols of low and intermediate molecular weights (MW = 200-2000) such as propoxylated glycerins. Higher molecular weight polyols can be used as initiators, but they are less preferred.

The process of the present invention advantageously uses a conventional base catalyst such as an alkali metal hydroxide or alkoxide, or the like. In addition, alkali metal hydroxides are economical and convenient.

In accordance with the present invention, the polymerization of the alkylene oxide is typically conducted in the presence of said catalysts. In accordance with the present invention, the polymerization catalyst is selected from the group consisting of alkali and/or alkaline earth metal hydroxides and/or alkali metal alkoxides. The catalyst and the polymerization conditions are chosen such that the product polyether contains not less than about 0.06, preferably not less than 0.075, more preferably not less than 0.08 and most preferably less than about 0.2 milliequivalents of terminal unsaturation per gram polymer.

Polyol unsaturation and its effect on polyurethane properties has been commented upon at great length, although the effects are unpredictable and difficult to quantify given that a lot of parameters have an influence on the foam.

Polyol unsaturation is generally measured by titration in accordance with ASTM test method D-2849-69 or its equivalent, and is expressed in milliequivalents of unsaturation per gram of polyol, hereinafter, "meq/g".

The process of the invention can be used to prepare specific class of polyether polyols further characterized in their functionality. In accordance with the present invention, the polyols have functionalities from 2.1 to 2.5,preferably from 2.2 to 2.4 and average molecular weight (MW) within the range of 3000 to 5000, preferably from 3500 to 4500, and more preferably from 3700 to 4300.

The process of the invention is used to make polyether polyols having a high content of primary hydroxyl groups. The proportion of primary hydroxyl groups needed for a particular use varies. Typically, at a given EO content, products having from about 70% to about 95% primary hydroxyl groups are needed, preferably from about 70% to about 90%. These products can be made with the process of the invention.

The ethoxylation step is generally performed after the addition of the PO followed by a cookdown and stripping step. After EO addition is complete, the reaction is generally held at the same or a higher temperature to complete the polymerization.

It is often desirable to provide the polyether with more reactive end groups than are ordinarily provided by the polymerization of the alkylene oxide, particularly when the alkylene oxide is the preferred C-3 or higher alkylene oxide. Most commonly introduced end groups are primary hydroxyl and primary and/or secondary amine groups. Primary and secondary amine groups can be introduced by a reductive amination process as described in U.S. Pat. No. 3,654,370, incorporated herein by reference. In accordance with the present invention, preferred ethylene oxide content vary from 12 to 20 % ethylene oxide.

Following ethoxylation, the EO-capped product is typically purified to remove catalyst residues in the neutralization and filtration step. Any suitable means of purifying the polyol can be used, including treatment with acids followed by filtration, an ion-exchange resin, water washing, or treatment with an adsorbent such as magnesium silicate. Suitable methods for purifying the EO-capped polyols are described, for example, in U.S. Pat. Nos. 3,715,402, 3,823,145, 4,721,818, and 4,355,188, the teachings of which are incorporated herein by reference.

In the process of the present invention, the polymerization is advantageously conducted at elevated temperature and pressure. In accordance with the present invention, operating temperatures for the polymerization are from 125° C. to 150° C., preferably from 130 DEG° to 140 DEG °C. Suitable pressures are from about 20 to 200 psig, preferably from 40 to 70 psig..

The reactor is initially charged with an initiator and an epoxide polymerization catalyst. Typically, the dehydrated mixture is heated to the desired reaction temperature, propylene oxide is fed to the reactor, and polymerization begins.

The polymerization reaction is performed at high temperature. Conventional polyether polyol synthesis temperatures can be used (95-120°C). An advantage of the invention is that much higher temperatures can be used. Thus, the process of the invention can be performed at temperatures within the range of 125 to 150 DEG °C. A more preferred range is from about 130°C to about 150 DEG °C. Most preferred is the range from about 130°C to about 140°C.

The invention also includes apparatus for performing the process of the invention. The apparatus includes a propylene oxide source, a stirred-tank reactor, heat exchangers and a distillation column for separating volatile components.

The propylene oxide source can be any source of pure propylene oxide, mixed epoxides, separate feeds of propylene oxide and other epoxides, and streams of recycled epoxides from the process.

The distillation column is any column that can separate unreacted epoxides, usually mostly propylene oxide, from higher boiling volatile materials including allyl alcohol and lower allyl alcohol propoxylates.

The process of the present invention offers numerous advantages compared with conventional polyether polyol syntheses. Because unusually high temperatures can be used, reaction rates are faster, epoxide feed rates can be increased,and production efficiency is increased . Productivity improvements of 40-300% compared with conventional processes can be achieved. The higher productivity means that plant capacity can be increased and availability for the customer and the market in general can be met.

The reaction and stripping steps at high temperatures results in a lower content of the most volatiles compounds in the final polyol which is one parameter important in the end application of the polyurethane foam .

Propoxylation at higher temperatures also creates the ability to use reduced catalyst levels. Less is spent on fresh catalyst and catalyst removal from the polyol and therefore there is a reduction in waste disposals. Because the process can be performed at low epoxide concentrations process safety improves. In addition less stripping implies better effluent treatment which in turn has favorable environmental consequences.

In accordance with the present invention, the process makes it possible and practical to produce some kinds of polyether polyols that have not been previously available.

The polyether polyols made by the process of the invention have a high content of primary hydroxyl groups. This feature makes them valuable for polyurethane applications that require a "reactive" polyol. At the same time, the polyols have significantly higher functionality at a given low molecular weight than polyols made using only a basic catalyst at conventional temperatures. Low viscosity polyols such as the ones made by the process of the invention offer many well-recognized advantages for polyurethanes, including improved moulding properties.

Another aspect of the present invention is the reaction mixture comprising the polyol and a polyisocyanate. Suitable polyisocyanates include aliphatic polyisocyanates as well as aromatic polyisocyanates. Such polyisocyanates are described, for example, in U.S. Pat. Nos. 4,065,410, 3,401,180, 3,454,606, 3,152,162, 3,492,330, 3,001,973, 3,594,164, 3,164,605.

Aromatic polyisocyanates particularly useful herein include 2,4-and/or 2,6-toluene diisocyanate, diphenylmethanediisocyanate, p-phenylene diisocyanate, polymethylenepolyphenylpolyisocyanates, mixtures thereof and the like. Also useful are polymeric derivatives of diphenylmethanediisocyanate as well as prepolymers or quasi-prepolymers thereof.

Particularly useful aliphatic polyisocyanates include, for example, the hydrogenated derivatives of the foregoing aromatic polyisocyanates, as well as hexamethylene diisocyanate, isophoronediisocyanate, 1,4-cyclohexane diisocyanate and the like.

In addition, prepolymers and quasi-prepolymers of the foregoing polyisocyanates having an -NCO content of about 0.5 to about 30% by weight are useful herein.

The polyisocyanate is generally present in an amount sufficient to provide in the reaction mixture from about 70 to about 500, preferably about 80 to about 150, and more preferably about 95 to about 120 isocyanate groups per 100 active hydrogen atoms.

The polyurethane and/or polyurea polymer is prepared by reacting a reaction mixture containing the polyether as described herein with a polyisocyanate under conditions such that the components react to form the desired polymer. Conditions for the formation of polyurethane and/or polyurea polymers are well known and described, for example, in U.S. Pat. Nos. 3,639,543, 4,495,081, 4,218,513 and 4,451,588 incorporated herein by reference.

In addition to the aforementioned critical components, various optional materials are also advantageously contained in the reaction mixture.

It is generally useful to employ a catalyst in the reaction mixture. Catalysts for the reaction of isocyanates and active hydrogen containing compounds are well-known and described, for example, in U.S. Pat. No. 4,495,081. Preferred catalysts include tertiary amine compounds and organometallic compounds. Generally, from about 0.10 to about 1 part of catalyst is used per 100 parts of isocyanate-reactive materials in the reaction mixture, although the precise amount thereof is a matter of choice to the skilled artisan. It is noted that when the high equivalent polyether is amine-initiated it will typically be somewhat self-catalytic, and may thus require a reduced level of catalyst or no catalyst at all.

In preparing a polyurethane and/or polyurea foam, it is normal to include a blowing agent in the reaction mixture. Suitable blowing agents include water and low-boiling organic compounds such as halogenated methanes. Particularly useful halogenated methanes include methylene dichloride, trichloromonofluoromethane, dichlorodifluoromethane and the like. Water is commonly employed in an amount from about 0.5-5 parts per 100 parts polyahl. Halogenated methanes are typically used in an amount from about 10-50 parts per 100 parts polyahls. Other blowing agents, such as the so-called azo blowing agents, which generate a gas under the conditions of the polymerization reaction are similarly useful herein.

Other materials which can optionally be employed in the reaction mixture include surfactants, pigments and inert fillers, reinforcing fibers, antioxidants, preservatives, biocides and the like. The beneficial use of such materials is an obvious matter of choice to the skilled artisan.

In preparing the polyurethane and/or polyurea polymer, the polyether, polyisocyanate and other components are reacted, typically under conditions of an elevated temperature. The polymerization reaction may be carried out in a single reaction (one-shot process), or in one or more sequential reaction steps (prepolymer process). In the one-shot process, all the isocyanate-reactive components are reacted simultaneously with the polyisocyanate. In such process, it is normal practice to blend all components except the polyisocyanate into a "B-side" mixture, which is then reacted with the polyisocyanate to form the polyurethane and/or polyurea polymer. However, the order of mixing is not critical as long as the components do not undesirably react before all components are present. The reaction mixture is usually then placed in a mold (except for slabstock foams, which normally are permitted to freely rise) and cured at a suitable temperature. The apparatus used for blending and molding is not especially critical. Hand mixing, conventional machine mixing, and the so-called reaction injection molding (RIM) equipment are all suitable.

In the prepolymer process, all or a portion of one or more of the isocyanate reactive materials is reacted with a stoichiometric excess of the polyisocyanate to form an isocyanate-terminated prepolymer. This prepolymer is then reacted with the remaining isocyanate-reactive materials to prepare the polyurethane and/or polyurea polymer. The prepolymer can be prepared with either the polyether or the chain extender, or a mixture of both. The use of the prepolymer technique to prepare polyurethanes and/or polyureas is described, for example, U.S. Pat. No. 4,297,444, incorporated herein by reference.

The polyurethane of this invention is useful in preparing high resilient foam , elastomeric materials such as rollers, wheels, automobile fascia, steering wheels, gaskets, cushions, insulation, and the like.

The following examples are provided to illustrate the invention and not to limit the scope thereof. All parts and percentages are by weight unless otherwise indicated. Those skilled in the art will recognize many variations that are within the spirit of the invention and scope of the claims.

### EXAMPLE 1:

The initiator used was a 650 Mw triol with 2.31% of KOH. 143 g of the said precursor were heated under vacuum at 140°C. At that temperature, vacuum was stopped and 827.02 g of PO were added continuously, keeping the pressure in the reactor between 50 and 57 psi. The PO cookdown was performed at 145°C. At that point, the unreacted PO was stripped for 30 minutes. After that, nitrogen was introduced in the reactor at a pressure of 29 psi. Then, 199.37 g of EO were fed to the reactor, The polyol obtained was purified by neutralization with adipic acid and filtration.

### EXAMPLE 2:

650 Mw triol with 2.31% of KOH was used as a precursor. 499.15 g of the said precursor were heated under vacuum at 125°C. In the same way as in example 1, 2414.8 g of PO were fed to the reactor. After the PO cookdown and stripping, 512.3 g of EO were added at 130°C. The pressures during PO and EO feeding were kept at the same values as in example 1. The polyol was purified with phosphoric acid and filtered in order to remove the potassium phosphate crystals formed.

### EXAMPLE 3:

In the same way as in examples 1 and 2, a 650 Mw triol with 2.31% of KOH was used as initiator. 15 Kg of this precursor were heated under vacuum conditions in a spray loop reactor. 80.32 Kg of PO were fed continuously, keeping the pressure in the reactor between 42 and 50 psi. After the PO post-reaction and striping, 14.66 Kg of OE were fed to the reactor, at a pressure of 3.0 Kg/cm². The crude polyol was purified neutralising with adipic acid and filtrating.

### EXAMPLE 4:

In this case, the polyol obtained in example 3 was used to produce a SAN copolymer polyol with 40% theorethical solid content. The copolymer polyol was prepared by a semibatch polymerization system, using a tank reactor fitted with baffles and impeller. The reactor is initially charged with poyol obtained in example 3 and a steric stabilizant. The feed components, styrene, acrylonitrile, initiator and chain transfer agent were pumped into the reactor continuously in a period of two hours to the reactor. The contents of the reactor were well mixed and controlled at a temperature of about 130° C. Finished the reaction. The crude polymer polyol product then flowed through a cooler into a collection vessel. The crude product was vacuum stripped to remove volatiles before testing.
A high solids SAN based copolymer Polyol was produced with the following formulation (all components in percent by weight):

| Compound | |
|---|---|
| Polyol in example 3 | 55,5 |
| Steric stabilizant | 3,5 |
| Styrene | 27 |
| Acrylonitrile | 13 |
| Initiator | 0,50 |
| Chain Transfer | 0,50 |

This SAN copolymer made with Polyol in example 3 had a viscosity of 5,515 mPa.s at 25 C and average particle size of 1,2 microns .

Some of the analytical results are depicted in Table 1. Tables 2 , 3 present the different formulation of the foams together with some of the properties of the foams.Table 4 show properties of a foam made of the polymer polyol which can be used in less quantity .

**Table 1:**

| | EXAMPLE 1 | EXAMPLE 2 | EXAMPLE 3 | EXAMPLE 4 |
|---|---|---|---|---|
| IOH, mg KOH/g | 40.8 | 41.4 | 43.2 | - |
| Unsat., meq/g | 0.115 | 0.063 | 0.105 | - |
| Functionality | 2.2 | 2.45 | 2.21 | - |
| EO content, % | 16.45 | 15.74 | 13.37 | - |
| Primary hydroxyl content, % | 77.94 | 70.27 | 73.60 | - |
| Solid content, % | - | - | - | 39.5 |
| Viscosity 25°C, cp | 702,7 | | | 5.515 |

**Table 2:**

| Formulation | Polyol MW 6000 | Example 1 | Example 3 |
|---|---|---|---|
| Reactive polymer polyol 33% solid content | 25 | 25 | 25 |
| Polyol | 75 | 75 | 75 |
| Water | 2.4 | 2.4 | 2.4 |
| DEOA, diethanolamine | 0.6 | 0.7 | 0.8 |
| Silicone | 0.5 | 0.5 | 0.5 |
| Amine blow /gel ratio 1:2 | 0.15 | 0.15 | 0.15 |
| DBTDL, Dibutyltin dilaurate | 0.20 | 0.20 | 0.2 |
| TCPP, Tris-(Chloro Isopropyl) Phosphate | 2.0 | 2.0 | 2.0 |
| TDI T80 (Index 105), 2,6-Toluene Diisocyanate | 31.42 | 30.90 | 32.66 |
| Properties | | | |
| Density, Kg/cm³ | 34.2 | 34.6 | 34.9 |
| Relaxation, % | 1.65 | 1.60 | 0.3 |
| Cream time (s) | 11 | 11 | 11 |
| Rise time (s) | 124 | 118 | 133 |

**Table 3:**

| Formulation | Polyol MW 6000 | Example 3 |
|---|---|---|
| Polymer polyol 40% solid content | 10 | 10 |
| Polyol | 90 | 90 |
| Water | 4.95 | 4.95 |
| Crosslinker additive | 1.0 | 1.0 |
| DEOA, diethanolamine | 1.1 | 1.2 |
| Silicone | 0.5 | 0.5 |
| TCPP, Tris-(Chloro Isopropyl) Phosphate | 2 | 2 |
| Amine blow gel ratio 1:1 1 | 0.1 | 0.1 |
| Stannuos octoate | 0.2 | 0.2 |
| TDI T80 (Index 90), 2,6-Toluene Diisocyanate | 52.69 | 54.60 |
| Properties | | |
| Density, Kg/cm³ | 17.9 | 17.9 |
| Compression set 75% | 19.4 | 20.1 |
| Hardness CLD 40%, KPa | 1.33 | 1.14 |
| Resilience | 51 | 52 |

**Table 4:**

| Formulation | Reactive Polymer polyol 33% solid content | Example 4 |
|---|---|---|
| Polymer polyol | 25 | 20 |
| Polyol MW 6000 | 75 | 80 |
| Water | 2.4 | 2.4 |
| DEOA, diethanolamine | 0.6 | 1 |
| Silicone | 0.5 | 0.5 |
| Amine blow /gel ratio 1:2 | 0.15 | 0.15 |
| DBTDL, Dibutyltin dilaurate | 0.20 | 0.20 |
| TCPP, Tris-(Chloro Isopropyl) Phosphate | 2.0 | 2.0 |
| TDI T80 (Index 105), 2,6-Toluene Diisocyanate | 31.42 | 31,5 |
| Properties | | |
| Density, Kg/cm³ | 34.2 | 35 |
| Relaxation, % | 1.65 | 0,76 |
| Cream time (s) | 11 | 12 |
| Rise time (s) | 124 | 125 |

## Claims

1. A process for making a polyether polyol having unsaturation from 0.06 to 0.2 meq/g and having an average moleculair weight of 3000 to 5000 and having a functionality from 2.1 to 2.5 said process comprising polymerizing in a reactor a reaction mixture that contains propylene oxide, a hydroxyl group-containing or an amino group-containing initiator, and a polymerization catalyst selected from the group consisting of alkali and/or alkaline earth metal hydroxides and/or alkali metal alkoxides, to produce a polyether polyol, said process further **characterized in that** the polymerization temperature is within the range of 125 DEG C to 150 DEG C.

2. The process of claim 1 wherein the epoxide polymerization catalyst is an alkali metal hydroxide.

3. The process of claims 1-2 wherein the epoxide polymerization catalyst is potassium hydroxide

4. The process of claims 1-3 wherein the polyether polyol has not less tha 0.08 milliquivalents of terminal unsaturation per gram polymer

5. The process according to claims 1-4 whereby said polyether polyols have from 70 to 90% primary hydroxyl groups

6. The process for producing a polyurethane flexible foam , which comprises reacting at lease one low molecular weight polyol selected from the group consisting of a polyether polyol having unsaturation from 0.06 to 0.2 meq/g and having an average molecular weight of 3000 to 5000 and having a functionality from 2.1 to 2.5 an unsaturation from 0.06 to 0.2 meq/g.

7. A polyether polyol said polyol having
i) Unsaturation from 0.06 to 0.2 meq/g
ii) Average molecular weight of 3000 to 5000
iii)Functionality from 2.1 to 2.5

8. A polyether polyol according to claim 7 further comprising 70 to 90 % primary hydroxyl groups

9. High resilience foam made by reacting an organic polyisocyanate with a polyether polyol said polyol having an unsaturation from 0.06 to 0.2 meq/g and an average molecular weight of 3000 to 5000 and a functionality from 2.1 to 2.5, said polyol further **characterized in that** the polyol is made by polymerizing in a reactor a reaction mixture that contains propylene oxide, a hydroxyl group-containing or an amino group-containing initiator, and a polymerization catalyst selected from the group consisting of alkali and/or alkaline earth metal hydroxides and/or alkali metal alkoxides at a polymerization temperature within the range of 125 DEG C to 150 DEG C.

10. Elastomeric materials made by reacting a polyisocyanate with a polyether polyol said polyol having unsaturation from 0.06 to 0.2 meq/g and an average molecular weight of 3000 to 5000 and a functionality from 2.1 to 2.5 said polyol further **characterized in that** the polyol is made by polymerizing in a reactor a reaction mixture that contains propylene oxide, a hydroxyl group-containing or an amino group-containing initiator, and a polymerization catalyst selected from the group consisting of alkali and/or alkaline earth metal hydroxides and/or alkali metal alkoxides at a polymerization temperature within the range of 125 DEG C to 150 DEG C.

11. High resilience foam made by reacting an organic polyisocynate with a polyether polyol as defined in claims 7 and 8.

12. Elastomeric materials made by reacting an organic polyisocyanate with a polyether polyol as defined in claims 7 and 8

13. A polymer polyol comprising the polyol obtained from the process as defined in claims 1-6.

14. A polymer polyol comprising a polyether polyol as defined in claims 7 and 8.

15. A polymer polyol as defined in claim 14 further **characterized in that** said polymer polyol having a solid content from 10 to 50%
